# EUROPÄISCHE PATENTSCHRIFT

(11) **EP 2 618 589 B1**
(45) Veröffentlichungstag und Bekanntmachung des Hinweises auf die Patenterteilung: **23.09.2015**
(21) Anmeldenummer: 13000281.9
(22) Anmeldetag: 21.01.2013
(51) Int. Cl.: H04N 21/00, A61H 37/00

(54) **Therapiehaus für den Innenbereich**
Therapy house for indoors
Centre de traitement pour espace intérieur

(30) Priorität: 20.01.2012 AT 632012
(43) Veröffentlichungstag der Anmeldung: 24.07.2013
(73) Patentinhaber: Kontozamanis-Kunzenmann, Maria Regina, 6020 Innsbruck (AT)
(72) Erfinder: Kontozamanis-Kunzenmann, Maria Regina, 6020 Innsbruck (AT)
(74) Vertreter: Torggler, Paul Norbert

(56) Entgegenhaltungen:
- US-A1- 2011 079 259
- US-A1- 2011 209 417
- US-B1- 7 690 159

## Beschreibung

Die Erfindung betrifft ein Therapiehaus für den Innenbereich zur therapeutischen Behandlung wenigstens eines Patienten und einen Bausatz für ein solches Therapiehaus.

Ein solches Therapiehaus für den Innenbereich ist bislang vom Stand der Technik her nicht bekannt.

Zur therapeutischen Behandlung eines Patienten wurde bis jetzt unter anderem die sogenannte Festhaltetherapie angewendet, bei der das Kind in unmittelbarem Kontakt zum Therapeuten/Elternteil gestanden ist. Dabei wurde dies von den Beteiligten oft nicht als angenehm empfunden.

Im weitesten Sinne um ein Therapiehaus handelt es sich bei der US 2011/0079259 A1 vom 7. April 2011, dabei wird ein kleines Haus wie eine Schaukel aufgehängt, in dem das Kind untergebracht wird. Nachteilig ist dabei, dass es hier zu keiner Kontaktmöglichkeit zwischen dem Therapeuten und dem Kind kommt, ebenfalls ist kein ergonomisches Sitzen an einem Tisch mit Sitzgelegenheit möglich.

Ein weiteres Therapiehaus ist aus US 2011/0209417 A1 bekannt.

Aufgabe der Erfindung ist es, ein Therapiehaus für den Innenbereich zur therapeutischen Behandlung wenigstens eines Patienten anzugeben, bei dem kein unmittelbarer Körperkontakt zwischen Patient und Therapeut/Elternteil hergestellt ist, aber trotzdem eine therapeutische Behandlung des Patienten mittelbar möglich ist. Weiters soll das Therapiehaus leicht transportierbar sein.

Diese Aufgabe wird durch ein Therapiehaus mit den Merkmalen des Anspruchs 1 und einem Bausatz für ein Therapiehaus mit den Merkmalen des Anspruchs 14 gelöst.

Dadurch, dass das Therapiehaus einen Eingang für den Patienten und eine Sitzgelegenheit für den Patienten und einen Tisch aufweist, wobei wenigstens der Tisch an mindestens einer Wand im Therapiehaus lösbar befestigbar ist und für den Zutritt des Patienten in das Therapiehaus aus dem Bereich des Eingangs entfernbar ist, kann der Patient erst das Therapiehaus betreten und anschließend - durch das Anbringen des Tisches an einer Wand des Therapiehauses - im Therapiehaus fixiert werden, um eine therapeutische Behandlung durchzuführen. Ebenfalls ist es vorgesehen, dass zum Beispiel zwei (oder mehr) Patienten das Therapiehaus betreten und anschließend der Tisch im Therapiehaus fixiert wird.

Weitere vorteilhafte Ausführungsformen der Erfindung sind in den abhängigen Ansprüchen definiert.

Schutz wird auch begehrt für einen Bausatz für ein Therapiehaus, wobei die einzelnen Teile des Bausatzes Verbindungseinrichtungen aufweisen, die zum Aufbau und zum Zerlegen des Therapiehauses miteinander lösbar befestigbar sind. Dadurch wird es ermöglicht, das Therapiehaus auf einfache Art und Weise zu transportieren, da das Therapiehaus an einem Ort zerlegt und an einem anderen Ort wieder aufgebaut werden kann.

Speziell vorgesehen ist dieses multifunktionelle Therapiehaus für Ergo-, Logo- und Psychotherapeuten zur therapeutischen Behandlung autistischer Kleinkinder, Kinder, Jungendlicher, Erwachsener mit ASS/ASD (Autismus Spektrum Störungen / Autism Spectrum Disorders) und Kindern, Jugendlichen und Erwachsenen mit Aufmerksamkeitsdefizit-/Hyperaktivitätssyndrom oder -störungen, wie ADHS/ADHD (Attention Deficit Hyperacitivity Disorders) oder ADS/ADD (Attention Deficit Disorders), Hyperkinetische Störungen (HKS/HKD), Verhaltens-, Konzentrations- und Lernstörungen und Störungen der sensorischen Integration.

Durch dieses Therapiehaus wird ein stark reizreduzierter (optisch und akustisch) Raum geschaffen, der konzentriertes Spielen, Lernen und Arbeiten, sowie bessere Kommunikation und den Aufbau von Blickkontakt zwischen Therapeuten und Patienten ermöglicht. Die Ausdauer, Konzentrations- und Reaktionsfähigkeit der autistischen bzw. verhaltensgestörten Person wird gesteigert. Es kommt zu einer sensorischen Entlastung. Durch stufenweise verminderte oder vermehrte Reizzulassung (durch Schließen oder Öffnen des Dachs, der Fenster, der Türflügel oder der Vorhänge) wird ein für die zu behandelnde Person optimales Umfeld und Arbeitsfeld geschaffen.

Dem Patienten verbleibt im Therapiehaus noch genug Aktionsradius, um darin z.B. spielen zu können, aber es gibt andererseits nicht zuviel Freiraum, durch welchen der Patient wieder leichter abgelenkt werden könnte bzw. durch den er ausweichen könnte.

Im Speziellen ist das multifunktionelle Therapiehaus für Ergo-, Logo- und Psychotherapeuten sowie für Ärzte bzw. Eltern vorgesehen.

Das Therapiehaus eignet sich als therapeutisches Hilfsmittel für Therapieeinrichtungen und Therapiezentren, aber auch für Kindertagesstätten und Kindergärten, Schulen, Behindertenschulden oder Sonderschulen. Ebenfalls ist vorgesehen, es in Kinderkrankenhäusern, Kinderpsychiatrien und Psychiatrien sowie zu Hause einzusetzen.

Das Ziel dabei ist, ein konzentriertes Spielen, Lernen, Beschäftigen und Arbeiten zu erreichen. Ein weiteres Ziel ist die Steigerung der Ausdauer und der Konzentrationswie auch der Reaktionsfähigkeit. Auch die Aufmerksamkeits- und die Beobachtungsfähigkeit sowie die Kontaktfähigkeit soll dabei gesteigert werden. Eine Verbesserung der nonverbalen und verbalen Kommunikation wird ebenso angestrebt wie eine bessere Fokussierung auf Mimik und Gestik des Gegenübers. Durch den Einsatz des Therapiehauses wird der Blickkontakt leichter aufgebaut und somit gefördert. Weiters wird das Erwecken von Interesse erleichtert und die Motivation kann gesteigert werden. Es kommt zu einer sensorischen Entlastung des Patienten, wenn er sich im Therapiehaus befindet. Ebenso finden eine Verminderung und ein Abbau von Stereotypien statt.

Durch das Therapiehaus erfolgt eine bessere Körperkontrolle für den Patienten sowie eine Verminderung bzw. Einschränkung von Ausweichbewegungen bzw. Ausweichmanövern des Patienten. Es kann somit also auch erzielt werden, dass es zu einer Einschränkung von nicht erwünschten Handlungen und nicht erwünschtem Verhalten kommt.

Ein besonderer Vorteil des Therapiehauses liegt darin, dass es zu einer Einschränkung des Blickfeldes des Patienten kommt, wodurch eine Fokussierung auf das Wichtige verbessert wird. Weiters kommt es durch die Therapie im Therapiehaus zu einer Förderung der Desisolation. Das multifunktionelle Therapiehaus bietet einen optisch und akustisch stark reizreduzierten Raum. Weiters ermöglicht das Therapiehaus, dass eine stufenweise Verminderung bzw. eine Erhöhung der Reizzulassung erfolgen kann, etwa durch Schließen oder Öffnen des Dachs, der Fenster, der Türflügel oder von Vorhängen. Somit ist ein optimales Umfeld und Arbeitsfeld für den Patienten und den Therapeuten geschaffen, unter anderem auch, weil es ein optimales bilaterales Führen der Hände ermöglicht.

Das Therapiehaus ist jedoch nicht nur zur therapeutischen Behandlung vorgesehen, sondern findet auch Verwendung im alltäglichen Leben wie etwa zur Nahrungsaufnahme, zum Spielen, zum Beschäftigen, zum Schreiben, Lesen und Lernen sowie zum Arbeiten. Das Therapiehaus ist weiters vielseitig verwendbar, eben nicht nur als Therapieort, sondern auch als Kasperltheater, Verkaufsladen, Postamt, Bank, Schattenspielbühne, als Arbeitstafel für großräumiges, stehendes Malen, zum Zeichnen, Schreiben und Rechnen, als Schreibtafel und als Magnettafel.

Weiters dient das Therapiehaus als Ort zum Wohlfühlen, wo sich der Patient sicher, geborgen und beschützt fühlen kann. Auch dient es als ein Ort, in den man sich zurückziehen und in dem man Zuflucht finden kann.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen:
- Fig. 1: zeigt den Boden in Ansicht von oben
- Fig. 2: zeigt den Boden in Ansicht von unten mit Schubfach
- Fig. 3: zeigt den Boden in Ansicht von oben
- Fig. 4: zeigt den Boden in Ansicht von unten mit Schubfach
- Fig. 5: zeigt den sensorischen Stimulationsteppich in Ansicht von oben
- Fig. 6: zeigt die linke Seitenwand in Ansicht von innen
- Fig. 7: zeigt die linke Seitenwand in Ansicht von außen
- Fig. 8: zeigt die linke Seitenwand in Ansicht von innen
- Fig. 9: zeigt die linke Seitenwand in Ansicht von außen
- Fig. 10: zeigt die rechte Seitenwand in Ansicht von innen
- Fig. 11: zeigt die rechte Seitenwand in Ansicht von außen
- Fig. 12: zeigt die rechte Seitenwand in Ansicht von innen
- Fig. 13: zeigt die rechte Seitenwand in Ansicht von außen
- Fig. 14: zeigt die Polsterung der Rückenwand in Ansicht von innen
- Fig. 15: zeigt die Rückenwand ohne Polsterung in Ansicht von innen
- Fig. 16: zeigt den Tisch in Ansicht von oben
- Fig. 17: zeigt den Tisch in Ansicht von unten
- Fig. 18: zeigt den Tisch in Ansicht von vorne, oben
- Fig. 19: zeigt den Tisch in Ansicht von vorne, unten
- Fig. 20: zeigt das Flachdach in Ansicht von oben
- Fig. 21: zeigt das Flachdach in Ansicht von unten
- Fig. 22: zeigt das Flachdach in Ansicht von hinten, oben
- Fig. 23: zeigt das Flachdach in Ansicht von hinten, unten
- Fig. 24: zeigt die Sitzgelegenheit in Ansicht von vorne, oben
- Fig. 25: zeigt die Sitzgelegenheit in Ansicht von vorne, unten
- Fig. 26: zeigt den Fensterladen in Ansicht von außen
- Fig. 27: zeigt den Fensterladen in Ansicht von außen, seitlich
- Fig. 28: zeigt den Fensterladen in Ansicht von innen
- Fig. 29: zeigt den Fensterladen in Ansicht von innen, seitlich
- Fig. 30: zeigt das Fenster mit Plexiglas in Ansicht von außen
- Fig. 31: zeigt das Fenster mit Plexiglas in Ansicht von außen, seitlich
- Fig. 32: zeigt das Fenster mit Plexiglas in Ansicht von innen
- Fig. 33: zeigt das Fenster mit Plexiglas in Ansicht von innen, seitlich
- Fig. 34: zeigt den oberen, rechten Flügeltürteil in Ansicht von außen
- Fig. 35: zeigt den oberen, rechten Flügeltürteil in Ansicht von innen
- Fig. 36: zeigt den oberen, rechten Flügeltürteil in Ansicht von innen, seitlich
- Fig. 37: zeigt den mittleren, rechten Flügeltürteil in Ansicht von außen
- Fig. 38: zeigt den mittleren, rechten Flügeltürteil in Ansicht von innen
- Fig. 39: zeigt den mittleren, rechten Flügeltürteil in Ansicht von innen, seitlich
- Fig. 40: zeigt den unteren, rechten Flügeltürteil in Ansicht von außen
- Fig. 41: zeigt den unteren, rechten Flügeltürteil in Ansicht von innen
- Fig. 42: zeigt den unteren, rechten Flügeltürteil in Ansicht von innen, seitlich
- Fig. 43: zeigt den oberen, linken Flügeltürteil in Ansicht von außen
- Fig. 44: zeigt den oberen, linken Flügeltürteil in Ansicht von innen
- Fig. 45: zeigt den oberen, linken Flügeltürteil in Ansicht von innen, seitlich
- Fig. 46: zeigt den mittleren, linken Flügeltürteil in Ansicht von außen
- Fig. 47: zeigt den mittleren, linken Flügeltürteil in Ansicht von innen
- Fig. 48: zeigt den mittleren, linken Flügeltürteil in Ansicht von innen, seitlich
- Fig. 49: zeigt den unteren, linken Flügeltürteil in Ansicht von außen
- Fig. 50: zeigt den unteren, linken Flügeltürteil in Ansicht von innen
- Fig. 51: zeigt den unteren, linken Flügeltürteil in Ansicht von innen, seitlich
- Fig. 52: zeigt das Satteldach in Ansicht von vorne, unten
- Fig. 53: zeigt das Satteldach in Ansicht von vorne, seitlich
- Fig. 54 - 68: zeigen den Steck- und Montagevorgang (ohne Fig. 60)
- Fig. 60: zeigt eine perspektivische Darstellung des zusammengebauten Therapiehauses von vorne mit geschlossenem Flachdach
- Fig. 69: zeigt das multifunktionelle Therapiehaus mit geschlossenem Flachdach
- Fig. 70: zeigt das multifunktionelle Therapiehaus mit geschlossenem Flachdach und geschlossenen Fensterläden
- Fig. 71: zeigt das multifunktionelle Therapiehaus mit geschlossenem Flachdach und geschlossenen Fenstern
- Fig. 72: zeigt das multifunktionelle Therapiehaus mit offenem Flachdach und halboffenen Fenstern. Das zusammengeklappte Flachdach befindet sich im Schubfach in der Basis
- Fig. 73: zeigt das multifunktionelle Therapiehaus mit aufgesetztem Satteldach und halboffenen Fenstern
- Fig. 74: zeigt das multifunktionelle Therapiehaus mit aufgesetztem Satteldach und halboffenen Fenstern von hinten, seitlich
- Fig. 75: zeigt das multifunktionelle Therapiehaus mit aufgesetztem Satteldach und offenen Fenstern und offenem, 3-teiligem Türflügel in Seitenansicht rechts, mit Maßangaben
- Fig. 76: zeigt das multifunktionelle Therapiehaus ohne Satteldach mit den rechtwinklig geöffneten zwei 3-teiligen Türflügeln in Vorderansicht mit ergonomischen Tisch und höhenverstellbarem Boden, mit Maßangaben
- Fig. 77: zeigt das multifunktionelle Therapiehaus mit aufgesetztem Satteldach, mit dem linken, geschlossenem 3-teiligen Türflügel und dem unteren, rechten, geschlossenem Türflügelteil, dem mittleren, rechten rechtwinklig geöffneten Türflügelteil, dem oberen, rechten auf 180 Grad geöffnetem Türflügelteil, mit halb geöffneten Fenstern, mit ergonomischem Tisch in Vorderansicht von der rechten Seite, mit Maßangaben
- Fig. 78: zeigt eine Fotografie eines fertig zusammengebauten, geschlossenem Therapiehauses.
- Fig. 79: zeigt eine perspektivische Fotografie eines Therapiehauses mit geöffneten Flügeltüren bevor die Sitzgelegenheit, der Tisch und der Zwischenboden eingeschoben wurden.
- Fig. 80: zeigt eine Fotografie eines Therapiehauses als Kasperltheater
- Fig. 81: zeigt eine weitere Fotografie eines Therapiehauses
- Fig. 82: zeigt eine weitere Fotografie eines Therapiehauses
- Fig. 83: zeigt eine weitere Fotografie eines Therapiehauses

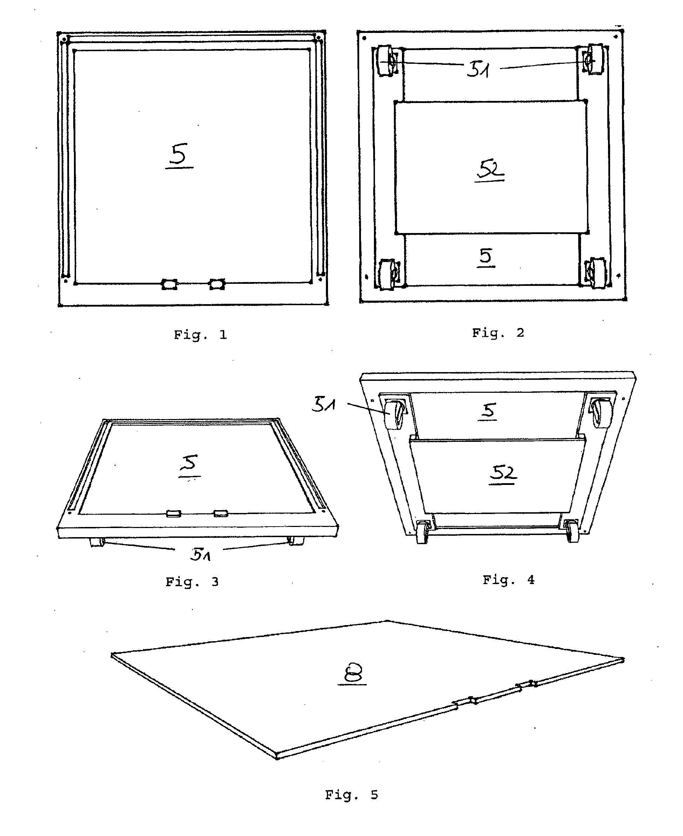

In den Figuren 1 bis 53 sind die einzelnen Teile des Bausatzes für das Therapiehaus 100 dargestellt, wobei diese einzelnen Teile Verbindungseinrichtungen aufweisen, die zum Aufbau und zum Zerlegen des Therapiehauses 100 miteinander lösbar befestigbar sind.

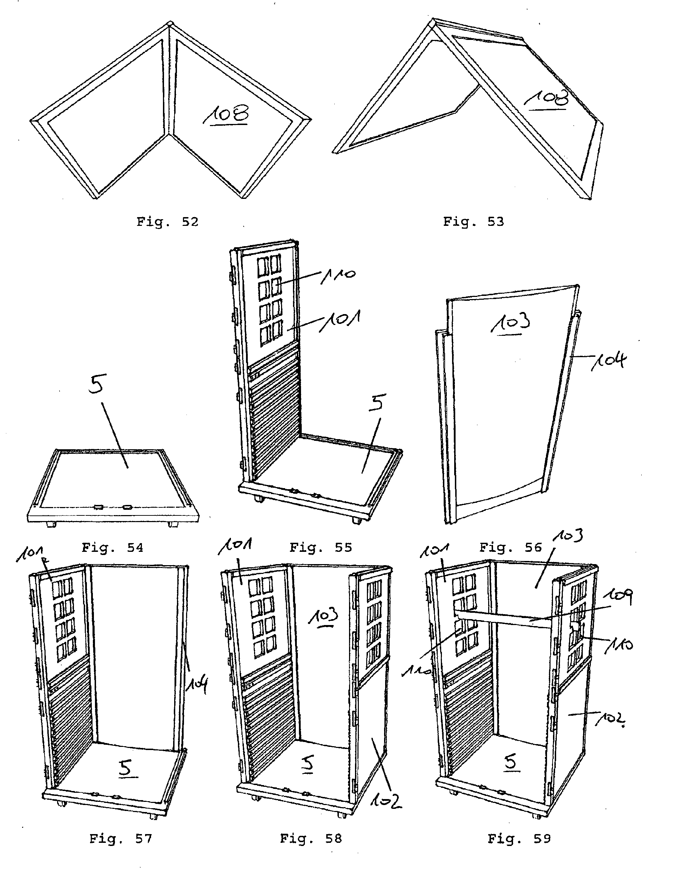

In den Figuren 54 bis 59 und 61 bis 68 wird der Zusammenbau des Therapiehauses schrittweise aufgezeigt.

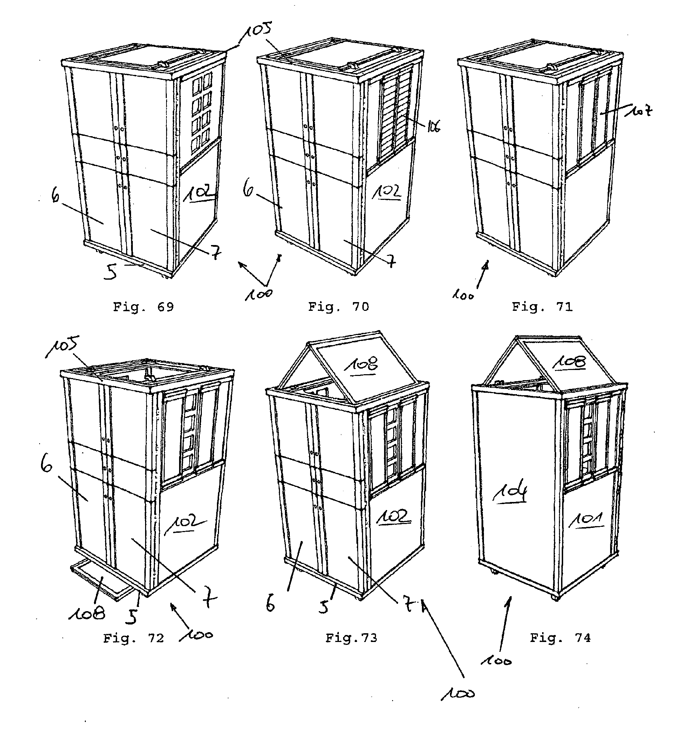

In den Figuren 69 bis 74 werden Dach- und Fenstervariationen dargestellt.

Die Figuren 1 bis 4 zeigen den Boden 5 des Therapiehauses, wobei der Boden 5 in diesem bevorzugten Ausführungsbeispiel über vier Räder 51 verfügt, durch die das Therapiehaus 1 verfahrbar ist. An der Unterseite des Bodens 5 ist das Schubfach 52 angeordnet in dem unter anderem das Satteldach 108 (siehe Figur 72) untergebracht werden kann.

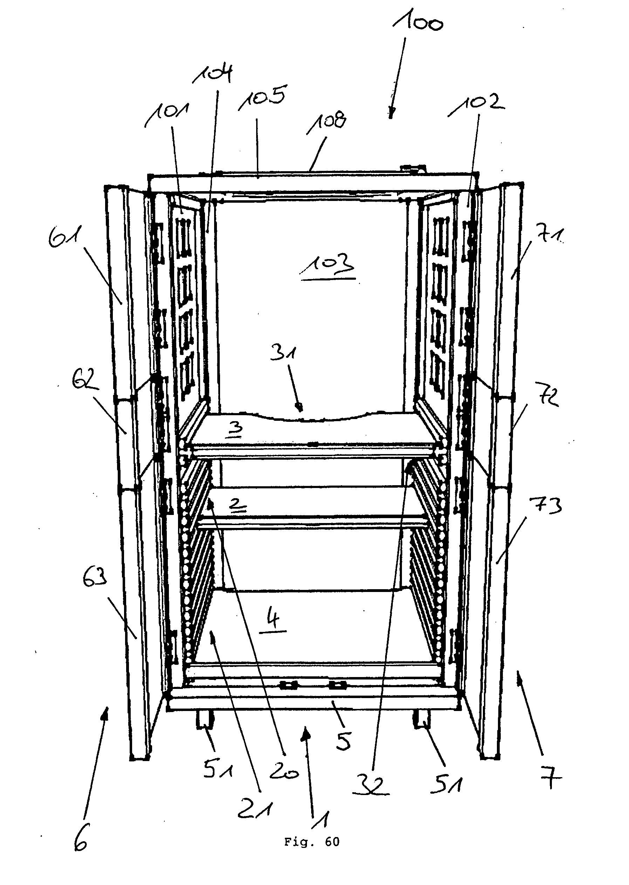

Figur 5 zeigt eine perspektivische Darstellung eines sensorischen Stimulationsteppichs 8, welcher am Boden 5 (siehe Figuren 1 bis 4) oder am Zwischenboden 4 (siehe Figur 60) lösbar befestigbar ist.

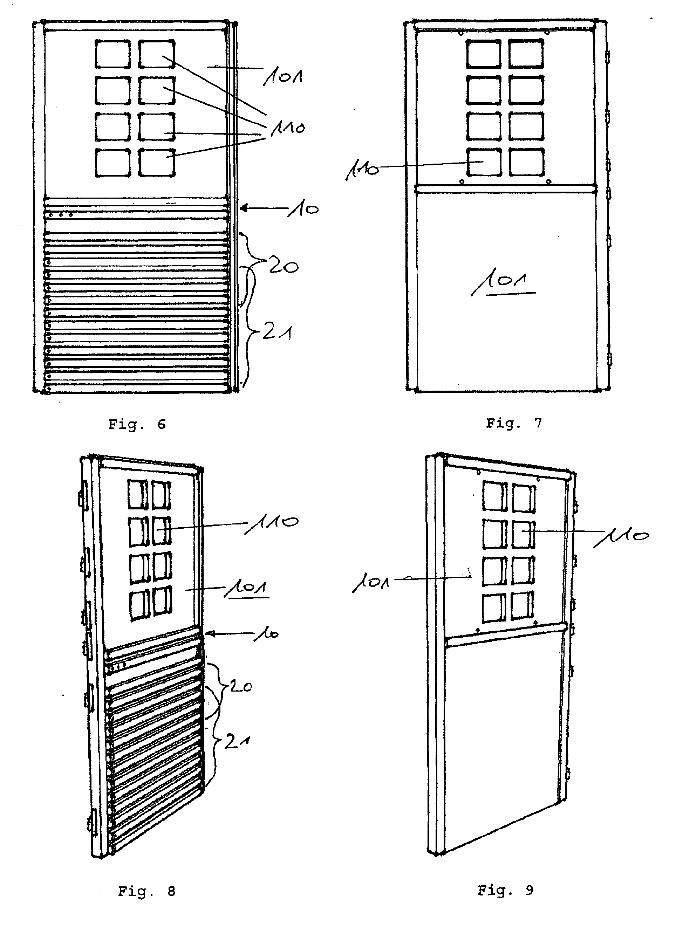

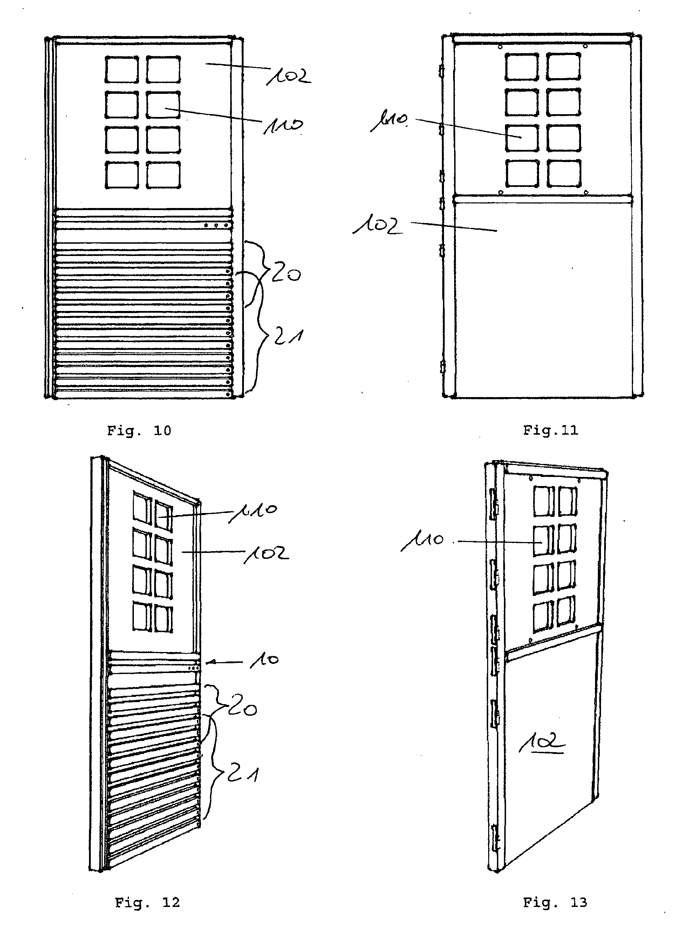

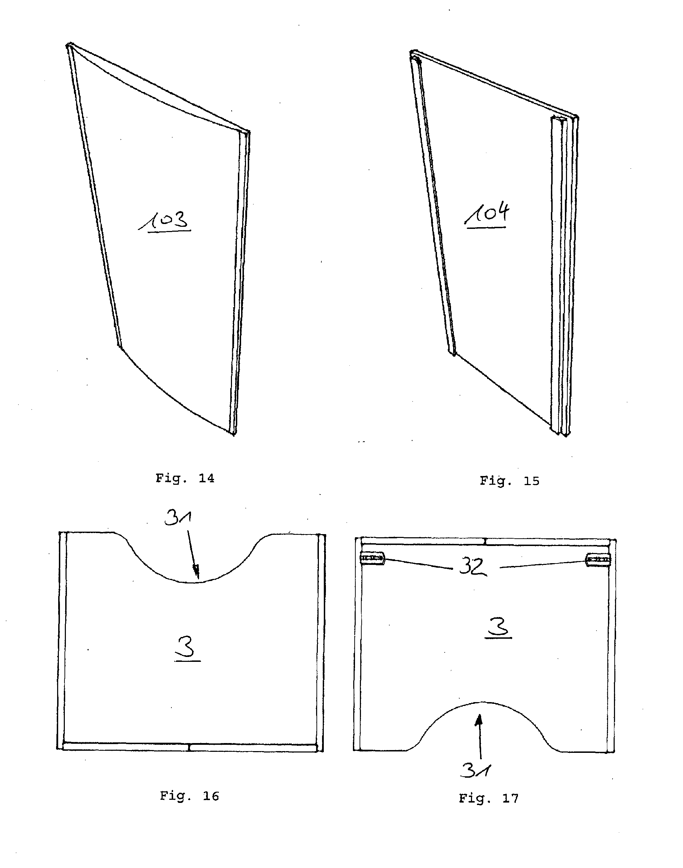

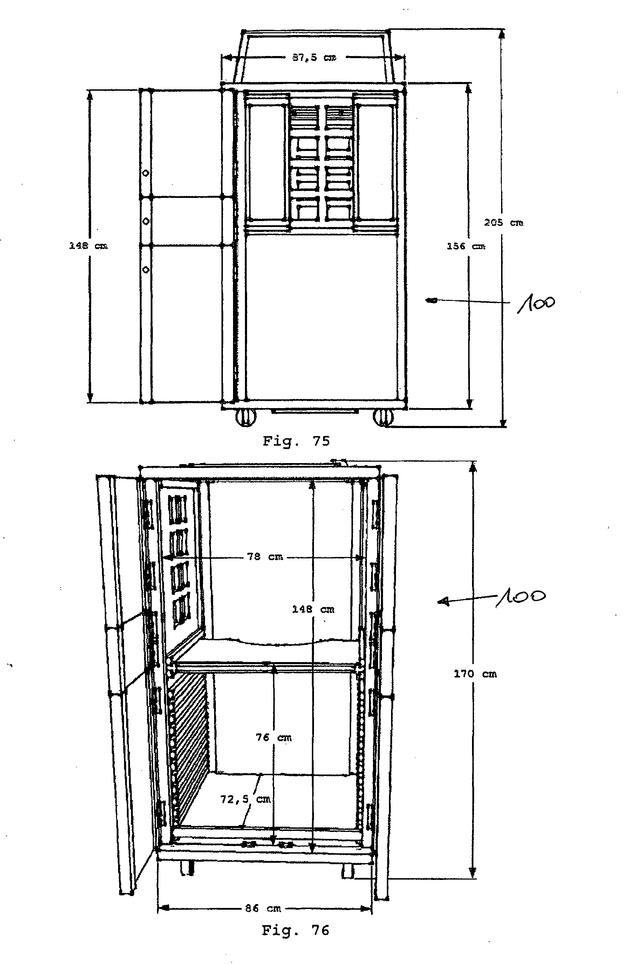

Die Figuren 6 bis 9 zeigen eine linke Seitenwand 101 des Therapiehauses 100 und die Figuren 10 bis 13 zeigen eine rechte Seitenwand 102 des Therapiehauses 100. Besonders gut ist in den Figuren 8 und 12 die Führungsvorrichtung 10 erkennbar, welche an den beiden gegenüberliegenden Seitenwänden 101 und 102 des Therapiehauses 100 ausgebildet ist, durch welche der Tisch 3 (nicht dargestellt, siehe Figuren 16 bis 19) im Wesentlichen horizontal in das Therapiehaus 100 einschiebbar ist und aus dem Therapiehaus 100 herausziehbar ist (siehe dazu Figuren 60 und 76).

Ebenfalls ist aus den Figuren 8 und 12 gut die Höhenverstellvorrichtung 20 erkennbar, durch die die Sitzgelegenheit 2 in unterschiedlichen Höhen in dem Therapiehaus 100 angeordnet werden kann. In diesem bevorzugten Ausführungsbeispiel kann dabei die Sitzgelegenheit 2 in unterschiedlichen Nuten in der Höhenverstellvorrichtung 20 eingesetzt und eingeschoben werden.

Die Höhenverstellvorrichtung 21 für den Zwischenboden 4 (siehe Figur 60) ist ebenfalls an den Seitenwänden 101 und 102 des Therapiehauses 100 ausgebildet und über diese Höhenverstellvorrichtung 21 kann der Zwischenboden 4 in verschiedenen Höhen im Therapiehaus 100 angeordnet werden (siehe Figur 60). Diese Höhenverstellvorrichtung 21 ist ebenfalls mit Nuten versehen, in die der Zwischenboden 4 eingesetzt und eingeschoben werden kann.

Die Figur 15 zeigt eine perspektivische Darstellung der Rückwand 104 des Therapiehauses 100. In diese Rückwand 104 kann die Polsterung 103 (Figur 14) eingesetzt werden, wodurch sich ein Patient, der sich im Therapiehaus 100 befindet, nicht an der Rückwand verletzen kann (siehe dazu Figuren 60, 82 und 83).

In den Figuren 16 bis 19 ist der Tisch 3 dargestellt, welcher in diesem bevorzugten Ausführungsbeispiel einerseits über eine Arretiervorrichtung 32 verfügt, mittels der der Tisch 3 im Therapiehaus 100 durch den Therapeuten in seiner Montagestellung im Therapiehaus 100 arretierbar ist und somit vom Patienten nicht gelöst werden kann.

Weiters verfügt der Tisch 3 über eine Bauchaussparung 31 für den Patienten, was den Sitzkomfort in dem Therapiehaus 100 erhöht. In diesem bevorzugten Ausführungsbeispiel ist der Tisch 3 am Therapiehaus 100 nicht nur lösbar befestigbar, sondern darüber hinaus auch noch werkzeuglos an dem Therapiehaus 100 befestigbar und auch wieder werkzeuglos von diesem lösbar.

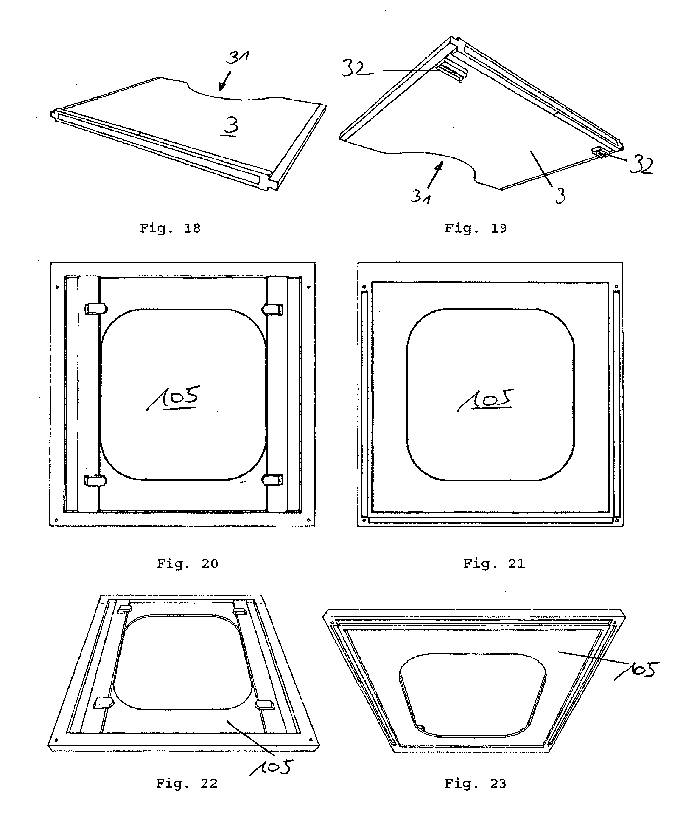

Die Figuren 20 bis 23 zeigen das Flachdach 105 in unterschiedlichen Ansichten.

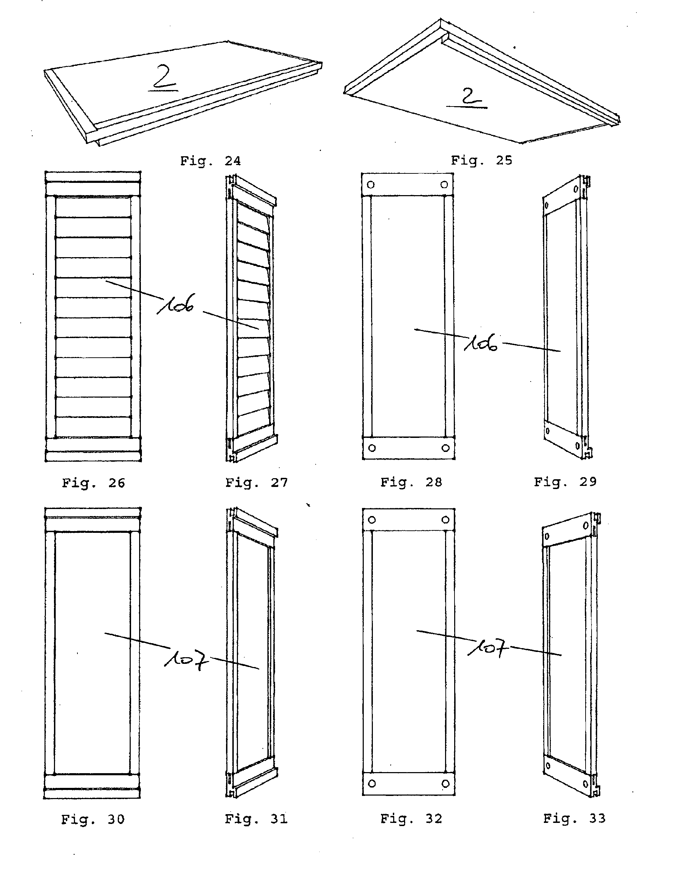

Die Figuren 24 und 25 zeigen in perspektivischen Ansichten die Sitzgelegenheit 2, die in diesem bevorzugten Ausführungsbeispiel als Sitzbank ausgebildet ist.

Die Figuren 26 bis 29 zeigen den Fensterladen 106 in unterschiedlichen Ansichten und die Figuren 30 bis 33 zeigen das Fenster 107 in unterschiedlichen Ansichten.

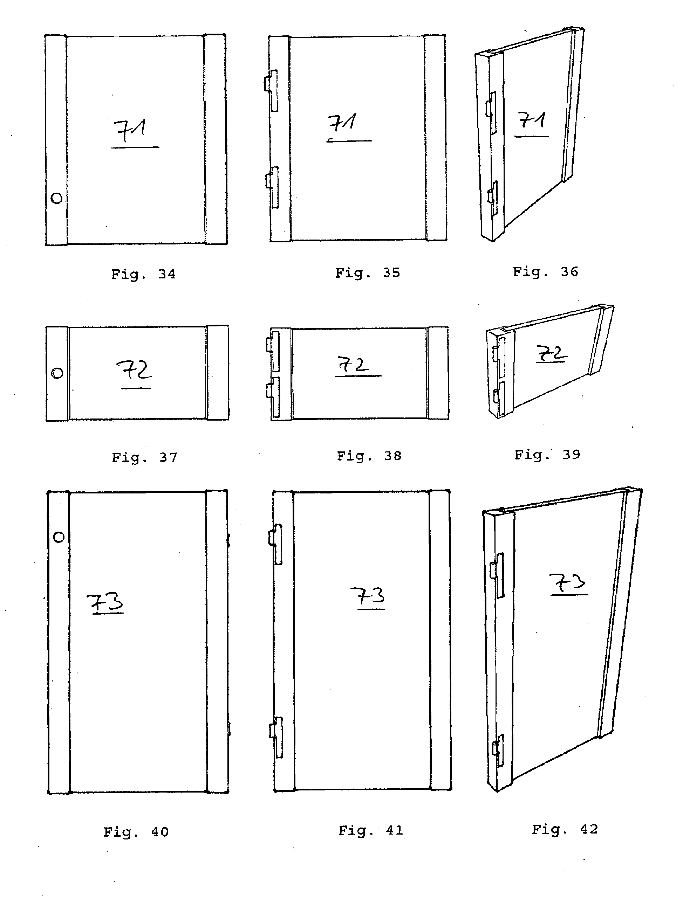

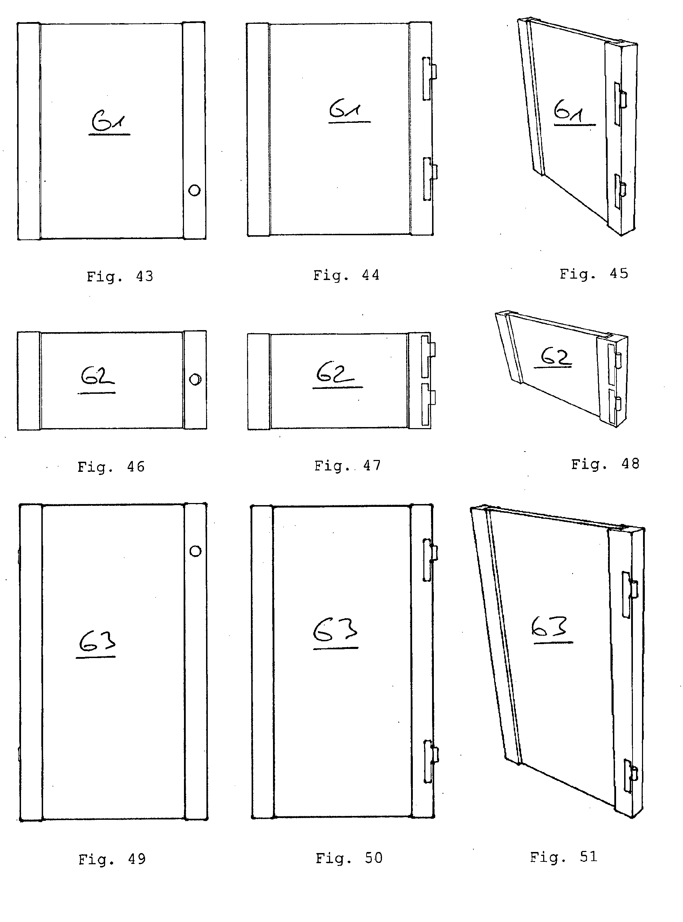

In den Figuren 34 bis 42 sind unterschiedliche Ansichten der Flügeltürenteile 71, 72, 73 der rechten Flügeltür 7 dargestellt und in den Figuren 43 bis 51 unterschiedliche Darstellungen der Flügeltürenteile 61, 62, 63 der linken Flügeltür 6 dargestellt. Die Figuren 52 und 53 zeigen das Satteldach 108 in zwei unterschiedlichen Darstellungen.

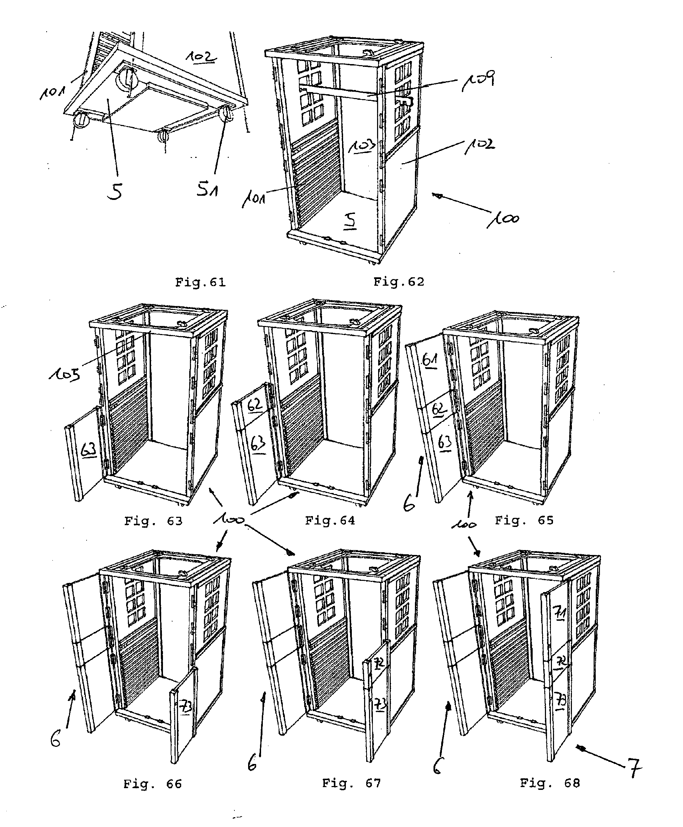

Anhand der Figuren 54 bis 59 und 61 bis 68 wird nun kurz der Zusammenbau des Bausatzes für ein Therapiehauses 100 beschrieben. Als erstes wird der Boden 5 mit den daran befindlichen Rädern 51 am Fußboden abgestellt. Ebenfalls ist hier natürlich auch vorstellbar, dass der Boden 5 über keine Rollen 51 verfügt und somit nicht verfahrbar wäre. In diesem bevorzugten Ausführungsbeispiel aber verfügt der Boden 5 aber über die Räder 51 und diese Räder 51 sind auch noch feststellbar, wodurch eine einmal eingenommene Position des Bodens 5 im Raum beibehalten werden kann und weiters der Aufbau mit festgestellten Rädern 51 einfacher und sicherer von Statten gehen kann. Anschließend wird, wie in Figur 55 dargestellt, die linke Seitenwand 101 am Boden 5 befestigt und anschließend die Rückwand 104 mit darin angeordneter Polsterung 103 an der linken Seitenwand 101 befestigt, wie dies in der Figur 57 dargstellt ist. Nun kommt, wie in Figur 58 gezeigt, die rechte Seitenwand 102 dazu. Um die Position sicher halten zu können, ist eine Platzhalterstange 109 vorgesehen, die in die Fenster 110 der beiden Seitenwände 101 und 102 eingesetzt wird und somit ein Auseinanderfallen des Therapiehauses 100 zum jetzigen Zeitpunkt verhindert. Nun werden die Seitenwände 101 und 102 und auch die Rückwand 104 durch den Boden 5 hindurch miteinander verschraubt, wie dies in der Figur 61 dargestellt ist. Anschließend kommt, wie in der Figur 62 dargestellt, das Flachdach 105 auf die beiden Seitenwände 101 und 102 und auf die Rückwand 104 und es werden die Seitenwände 101 und 102 und auch die Rückwand 104 durch das Flachdach 105 hindurch miteinander verschraubt. In den Figuren 63 bis 68 ist nun dargestellt, wie die Flügeltürenteile 61, 62, 63 und 71, 72, 73 der beiden Flügeltüren 6 und 7 an dem Therapiehaus 100 befestigt werden.

Figur 69 zeigt nun das Therapiehaus 100 mit geschlossenen Flügeltüren 6 und 7. Jetzt werden noch, wie in Figur 70 dargestellt, die Fensterläden 106 geschlossen. In Figur 71 ist das Therapiehaus 100 dargestellt, nicht mit geschlossenen Fensterläden 106 sondern mit geschlossenen Fenstern 107.

Aus dem Schubfach 52 im Boden 5 (siehe dazu Figuren 2 und 4) wird nun das zusammengeklappte Satteldach 108 entnommen, und, wie in den Figuren 73 und 74 dargestellt, auf dem Therapiehaus 100 platziert.

Figur 60 zeigt nun eine perspektivische Darstellung des zusammengebauten Therapiehauses 100 für den Innenbereich zur therapeutischen Behandlung wenigstens eines Patienten. Dieses Therapiehaus 100 weist einen Eingang 1 für den Patienten und eine Sitzgelegenheit 2 für den Patienten und einen Tisch 3 auf, wobei wenigstens der Tisch 3 an mindestens einer Wand des Therapiehauses - vorzugsweise lösbar - befestigbar ist und für den Zutritt des Patienten in das Therapiehaus 100 aus dem Bereich des Eingangs 1 entfernbar ist.

In diesem bevorzugten Ausführungsbeispiel ist der Tisch 3 am Therapiehaus 100 durch einen außerhalb des Therapiehauses 100 befindlichen Therapeuten lösbar befestigbar und vorzugsweise in seiner Montagestellung arretierbar - in diesem Ausführungsbeispiel durch die Arretiervorrichtung 32, welche sich unterhalb des Tisches 3 befindet (siehe dazu auch Figuren 17 und 19).

Die Sitzgelegenheit 2 ist in diesem bevorzugten Ausführungsbeispiel ebenfalls am Therapiehaus 100 lösbar befestigbar, wobei in diesem bevorzugten Ausführungsbeispiel die Sitzgelegenheit 2 an den gegenüberliegenden Seitenwänden 101 und 102 lösbar befestigbar ist. Durch die Höhenverstellvorrichtung 20 für die Sitzgelegenheit 2 kann die Sitzgelegenheit 2 in unterschiedlichen Höhen im Therapiehaus 100 angeordnet werden. Dies geschieht durch einfaches Verschieben der Sitzgelegenheit 2 in den Nuten der Höhenverstellvorrichtung 20.

Ebenso verstellbar ist der lösbar befestigbare Zwischenboden 4 durch die Höhenverstellvorrichtung 21 des Therapiehauses 100, welche ebenfalls über Nuten verfügt, in die der Zwischenboden 4 in unterschiedlichen Höhen eingeschoben und herausgezogen werden kann.

Links und rechts neben dem Eingang 1 des Therapiehauses 100 weist das Therapiehaus 100 die beiden Flügeltüren 6 und 7 auf.

Die beiden Flügeltüren 6 und 7 weisen in diesem bevorzugten Ausführungsbeispiel jeweils die Flügeltürenteile 61, 62, 63 und 71, 72, 73 auf und sind unabhängig von einander bewegbar.

Das Satteldach 108 befindet sich zusammengeklappt auf dem Flachdach 105.

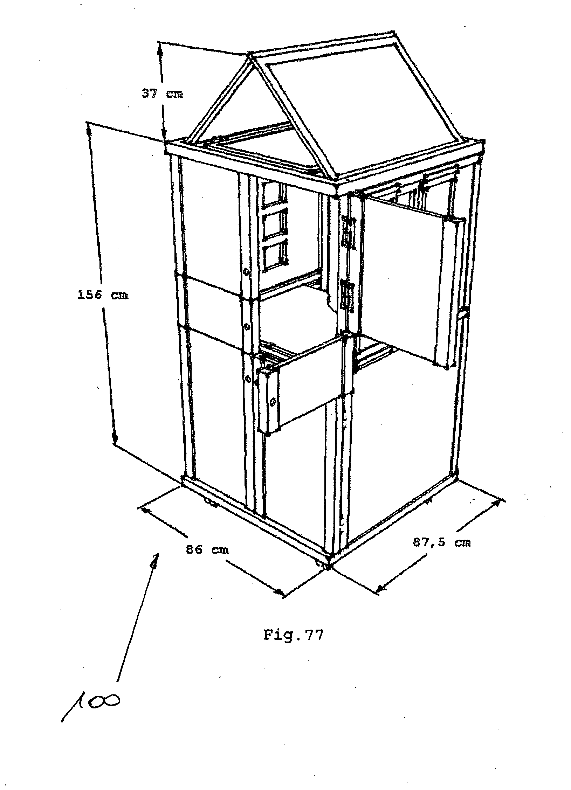

In den Figuren 75 bis 77 sind nun unterschiedliche Darstellungen eines fertig zusammengebauten Therapiehauses zu sehen mit bevorzugten Maßangaben. Diese Maßangaben stellen natürlich nur eine mögliche Ausführungsform dar. Bevorzugt angedacht ist aber schon, dass das Therapiehaus 100 eine Breite zwischen 60 cm und 150 cm aufweist und/oder eine Höhe zwischen 100cm und 250 cm und/oder eine Tiefe zwischen 60 cm und 150 cm aufweist.

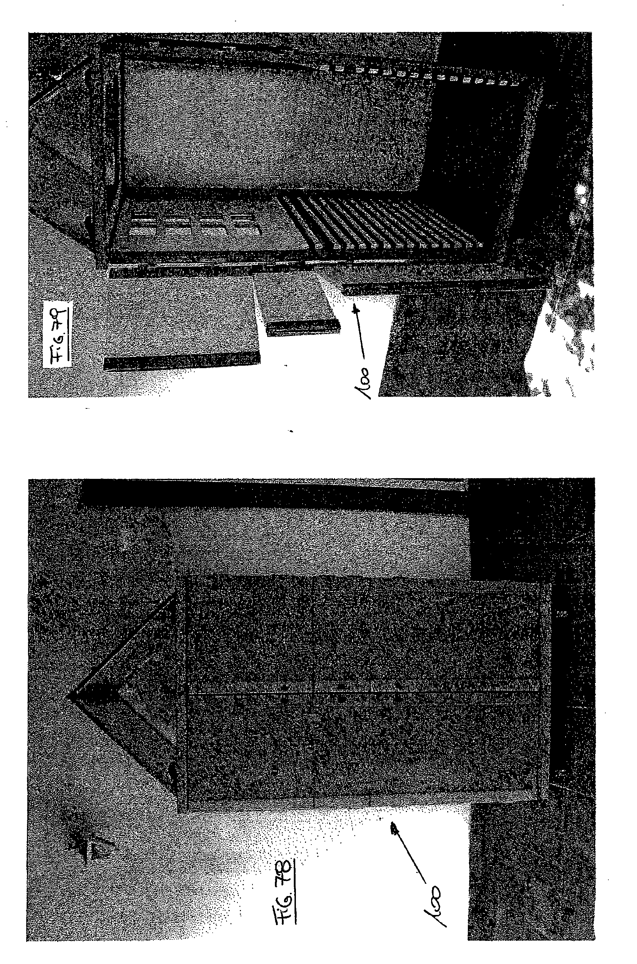

Figur 78 zeigt nun eine Fotografie eines fertig zusammengebauten Therapiehauses 100 in geschlossenem Zustand der beiden Flügeltüren 6 und 7.

Figur 79 zeigt eine perspektivische Fotografie eines Therapiehauses 100 mit geöffneten Flügeltüren bevor die Sitzgelegenheit, der Tisch und der Zwischenboden eingeschoben wurden.

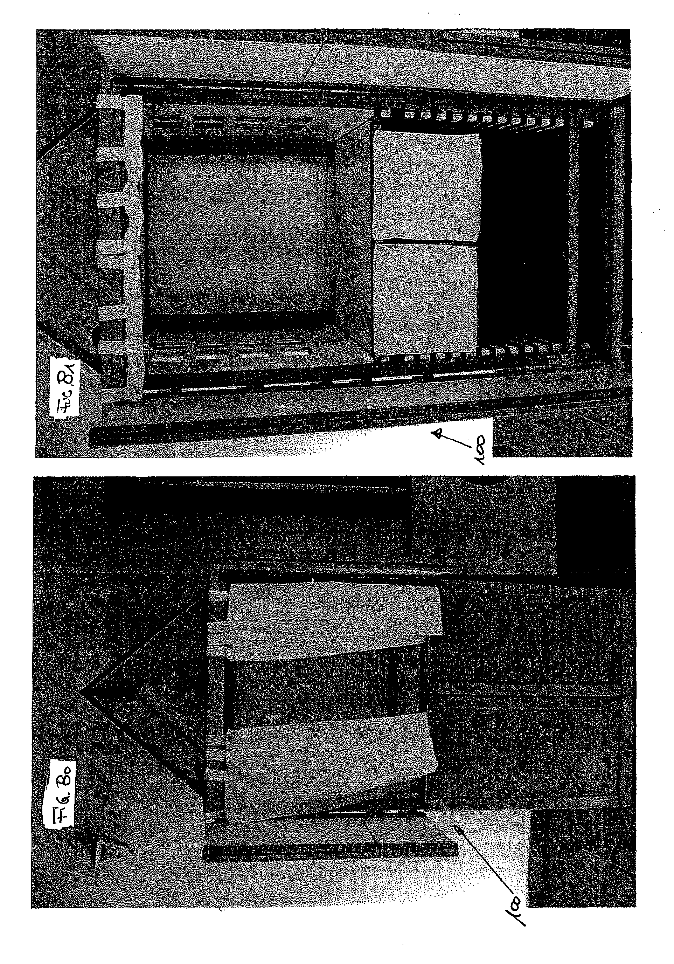

Figur 80 zeigt eine Fotografie eines Therapiehauses 100, das zu einem Kasperltheater umgebaut wurde und Figur 81 zeigt eine Fotografie mit zwei Stoffsäckchen, die an dem Tisch angebracht sind.

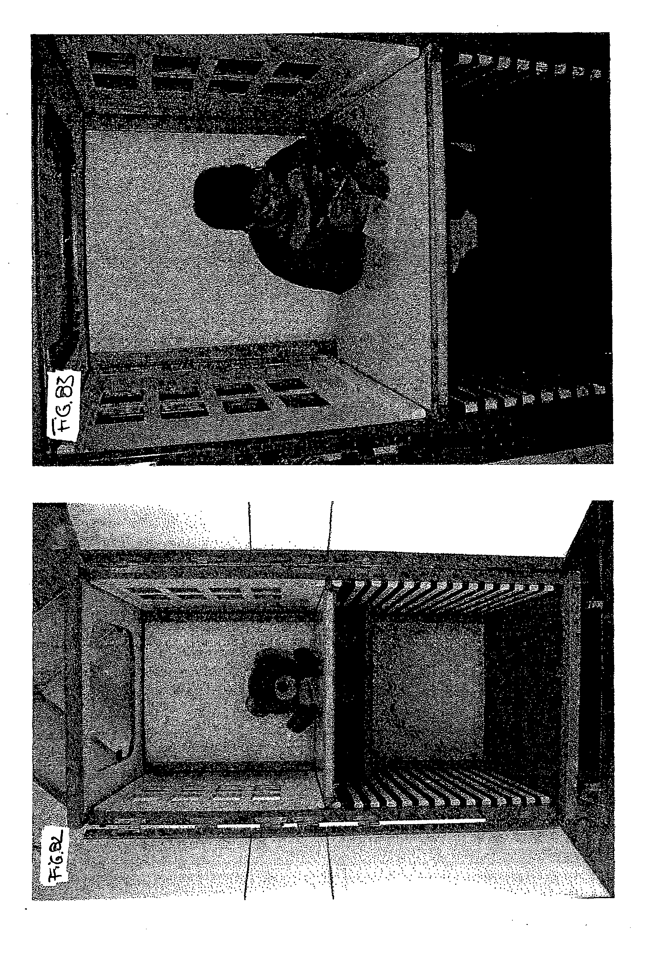

Figur 82 zeigt eine Fotografie eines Stofftiers, das im Therapiehaus 100 auf der Sitzgelegenheit 2 und am Tisch 3 sitzt (bei Nichtverwendung des Zwischenbodens) und Figur 83 zeigt einen Patienten bei der Arbeit im Therapiehaus 100 am Tisch 3.

In diesem bevorzugten Ausführungsbeispiel wie in allen Figuren beschrieben weist der Tisch 3 keine Höhenverstellung auf. Es ist natürlich ebenfalls vorstellbar, auch den Tisch 3 mit einer Höhenverstellung auszurüsten, um nicht nur die Sitzgelegenheit 2 oder den Zwischenboden 4 in seiner Höhe verstellen zu können, sondern eben auch um den Tisch 3 in seiner Höhe verstellen zu können.

Ebenfalls wird in diesem bevorzugten Ausführungsbeispiel der Tisch 3 von vorne in das Therapiehaus 100 eingeschoben. Ebenfalls ist natürlich vorstellbar, dass der Tisch 3 im Therapiehaus 100 an einer Wand befestigt wird und dann z.B. über Scharniere aus- und eingeklappt wird und somit nicht aus dem Therapiehaus 100 entfernt werden muss, um in eine Gebrauchstellung zu geraten. Ebenfalls wäre es zum Beispiel denkbar, dass der Tisch auf einer Innenseite einer Eingangstür befestigt ist und durch Schließen der Eingangstür der Tisch in den Innenraum des Therapiehauses 100 verschwenkt wird. In diesem Falle wäre es dann praktikabel, dass die Eingangstür zumindest zweigeteilt ist, in einen oberen verschwenkbaren Teil und einen unteren verschwenkbaren Teil an dem der Tisch befestigbar ist.

Nun folgt noch eine exakte Ausführung einer möglichen Ausführungsform des Therapiehauses 100, welche natürlich nicht einschränkend gesehen werden kann.

### Stecksystem:

leicht zusammensteckbar und zusammenschraubbar und wieder schnell zerlegbar durch 2 Erwachsene (mittels 8 Imbusschrauben sicher fixierbar mit Imbusschlüssel)

### Verwendete Materialien:

- Sperrholzplatten 2 cm dick, Sperrholzplatten 1 cm dick zur Verdickung der unteren beiden Seitenwände, Buchenholz, Eichenholz, mit weißem Resopal beschichtete Oberflächen (obere und untere Tischflächen),
- Schaumstoff und weiße Lederimitation (innere Rückwand),
- magnetische Tafelfolie, je nach Bedarf in Schwarz oder Grün oder
- Whiteboardfolie oder Filzwand (äußere Rückwand),
- weißer Leinenstoff,
- 8 Imbusschrauben mit Imbusschlüssel,
- 12 Scharniere (je 2 pro Türchen) mit 12 Gleitringen,
- 6 gerade Fensterriegel (je 2 für die 2 Tische und den höhenverstellbaren Boden),
- Klettverschluss oder Velcro 2 cm breit und 5 cm breit,
- durchsichtige, starke Plastikfolie,
- Sensorischer Stimulationsteppich,
- 4 bremsbare, schwenkbare Räder,
- Kugelschnapper zur Arretierung der Fensterläden.

Beschreibung der einzelnen Teile des Stecksystems:
- Tische: zwei stabile Tische (für Kinder und Erwachsene), beidseitig verwendbar, beliebig verschiebbar, zur optimalen Anpassung an den Körper der zu behandelten Person. Durch Therapeut, mittels zwei Fensterriegel unter dem Tisch, fixierbar. Oberflächenbelag weiß, leicht abwaschbar. Körperzugewandte Seite mit einem ergonomischen körpergerechten, halbkreisförmigen Ausschnitt. So einstellbar, dass das Kind nicht Hände unter den Tisch geben kann und durch Aktivitäten unter dem Tisch abgelenkt wird. Der dem Therapeuten zugewandte Tischrand hat eine Einkerbung zur Markierung der Mittellinie und ist mit Klettverschluss versehen, zur Anbringung der Leinensäckchen. Tischhöhe bleibt immer konstant. Dadurch besteht keine Verletzungsgefahr durch die seitlichen Holzschienen, welche sich alle unter dem Tisch befinden, zur optimalen Anpassung der Sitzbank und des mobilen Bodens.
- Sitzbänke: zwei stabile Sitzbänke (für Kinder und Erwachsene), um ergonomisches Sitzen zu gewährleisten, beliebig höhenverstellbar.
- Böden: ein fixer Boden und ein beliebig höhenverstellbarer Zwischenboden, welcher mittels zweier Fensterriegel fixierbar ist.
- Sensorischer Stimulationsteppichboden: wenn erwünscht, zur taktilen Stimulation der Füße, ansonsten jederzeit leicht entfernbar.
- Räder: vier Räder. Alle 4 Räder einzeln schwenkbar und bremsbar.
- Rückenwand innen: gepolstert mit 3 cm dickem, dichten Schaumstoff. Überzug mit weißer Lederimitation, bei evtl. Beschädigung, Verschmutzung oder Abnützung kann man die innere Oberseite der Rückenwand nach unten drehen. Die Polsterung dient als Schutz vor Verletzungsgefahr bei autoaggressivem Verhalten der Person (besonders bei unkontrolliertem Zurückwerfen des Kopfes oder absichtlichem Schlagen des Kopfes gegen die Rückenwand).
- Rückenwand außen: mit magnetischer Tafelfolie beschichtet, als Tafel, je nach Bedarf in Schwarz oder Grün, zur Anbringung von Zeichenpapier mittels Magneten, Schreiben mit Magnetbuchstaben, Rechnen mit Magnetzahlen oder Bilder legen mit magnetischen Formen sowie zum Zeichnen und Schreiben mit Tafelkreide.
- ODER Rückenwand außen: mit Whiteboardfolie beschichtet, als Whiteboard zum Zeichnen und Schreiben mit Whiteboardmarker.
- ODER Rückenwand außen: mit Filz beschichtet, als Filzwand zum Anbringen von laminierten Karten, Bildern etc. an deren Rückseite in der Mitte ein Stück Klettband befestigt wurde.
- Linke und rechte Seitenwand innen: in Sitzhöhe befinden sich die unten beschriebenen Fensterausschnitte. Darunter befinden sich 2 Holzschienen aus Eiche für die schiebbaren Tische und 13 Holzschienen aus Eiche für die schiebbaren, höhenverstellbaren Bänke und den höhenverstellbaren Zwischenboden.
- Linke und rechte Seitenwand außen: in der oberen Hälfte befinden sich die unten beschriebenen Fensterausschnitte. Darüber und darunter befindet sich je eine Holzschiene aus Eiche für die verschiebbaren Fenster oder Fensterläden. Ebenfalls befinden sich je 2 Kugelschnapper oben und unten, links und rechts von den Fensterausschnitten zur Arretierung der Fenster oder Fensterläden.
- Fenster: in der linken und rechten Seitenwand befinden sich in Sitzhöhe zwei große Fenster ohne Glas mit doppeltem Fensterkreuz und nicht zu großen rechteckigen Ausschnitten, damit kein Kinderkopf durchschauen und stecken bleiben kann und um optimalen Lichteinfall zu gewährleisten. Mobile Fenster aus Holz und Plexiglas: pro Fenster 2 Außenflügel, verschiebbar, einzeln arretierbar und verschließbar von außen. Holzrahmen aus Eiche und Scheiben aus milchfarbigem Plexiglas, welche Lichteinfall zulassen, jedoch nicht durchsichtig sind. Je nach Bedarf ganz offen, halb geschlossen oder ganz geschlossen zur Reduzierung von Lichtreizen und optischen Reizen aus der Umwelt. Im Gegensatz zu Fenstervorhängen können die Fenster von der zu behandelten Person nicht mutwillig entfernt werden.
- ODER Mobile Fensterläden aus Holz ohne Plexiglas: pro Fenster 2 Holzläden, verschiebbar, einzeln arretierbar und verschließbar von außen. Je nach Bedarf ganz offen, halb geschlossen oder ganz geschlossen zur Reduzierung von Lichtreizen und optischen Reizen aus der Umwelt. Im Gegensatz zu Fenstervorhängen können die Fensterläden von der zu behandelten Person nicht mutwillig entfernt werden.
- Fixes Flachdach innen: mit großer quadratischer, abgerundeter Öffnung für optimalen, natürlichen Lichteinfall von oben.
- Fixes Flachdach außen: mit großer quadratischer, abgerundeter Öffnung. Links und rechts davon mit je 2 kleinen, drehbaren Holzhebeln versehen um das zusammengeklappte Satteldach zu fixieren.
- Satteldach aus Holz und Plexiglas: zusammenklappbares Satteldach, bestehend aus 2 Teilen die durch ein Scharnierband miteinander verbunden sind. Jeder Teil besteht aus einem Holzrahmen aus Eiche und aus einer großen, milchfarbigen Scheibe aus Plexiglas, welche Lichteinfall zulässt jedoch nicht durchsichtig ist. Zum Aufsetzen auf fixem Flachdach als Satteldach oder zusammengeklappt als Flachdach und wieder leicht abnehmbar bei Bedarf durch nur einen Erwachsenen. 2 Holzrahmen aus Eiche und 2 Scheiben aus milchfarbigem Plexiglas. Mit Scharnierband sind die 2 Dach-Teile miteinander verbunden.
- Schubfach: befindet sich unter dem rollbaren Boden, zum leichten Verstauen des zusammengeklappten Satteldaches.
- Platzhalterstangen als Vorhangstangen: zwei Vorhangstangen aus Sperrholz (eine mit, eine ohne Klettverschluss) zum Anbringen diverser Vorhänge vor oder hinter dem Therapeuten bzw. zum Offenhalten der 2 Flügeltüren und zur obligatorischen Verwendung als Platzhalterstangen zur sicheren Montage des Hauses.
- Flügeltüren: rechts und links je zwei Flügeltüren, die in je 3 Teile unterteilt sind. Das obere, mittelgroße Flügeltürteil befindet sich im Oberkörperbereich, das mittlere, kleine Flügeltürteil befindet sich im Bauchbereich und das untere, große Flügeltürteil befindet sich im Unterkörperbereich. Alle Flügeltürteile sind unabhängig voneinander beweg- und schwenkbar. Alle Flügeltürteile sind mit 2 Scharnieren versehen und garantieren einen maximalen Öffnungsradius von 180 Grad. Bei Bedarf miteinander verbindbar mittels Klettverschluss zu je 2 großen Flügeltüren. Bei Bedarf (wenn der Therapeut von unkontrollierten Fußattacken der zu behandelten Person belästigt wird) können zum Schutz des Therapeuten die 2 unteren größeren Flügeltürchen geschlossen werden, während die kleineren oberen Flügeltürchen offen stehen bleiben.
- Keine Türgriffe zur Vermeidung von Verletzungsgefahr. Alle 6 Flügeltürteile sind mit fingerdicken Vertiefungen versehen zum leichten Öffnen und Schließen dieser von außen.
- Vorhang (groß) : einfarbiger, weißer Leinenstoffvorhang an Vorhangstange in geöffneter Tür als Kulisse hinter dem Therapeuten zur Verminderung der äußeren, optischen Reize. Optische Abgrenzung des Hintergrunds.
- Vorhang (klein): einfarbiger, weißer Leinenstoffvorhang an Vorhangstange in geöffneter Tür als Trennvorhang zwischen dem Therapeuten und dem Kind. Zum konzentrierten, unbeobachteten Arbeiten des Kindes. Beim Öffnen des Vorhangs überrascht das Kind den Therapeuten mit dem Endergebnis.
- Nylonvorhang: durchsichtiger Trennvorhang an Vorhangstange in geöffneter Tür (nur bei Bedarf) zwischen Therapeut und Kind (Schutzvorhang bei Spuckattacken des Kindes).
- Vorhang für Logotherapie: einfarbiger, weißer Leinenstoffvorhang an Vorhangstange in geöffneter Tür mit rundem Ausschnitt für Gesicht des Therapeuten zwischen dem Kind und dem Therapeuten, zum Ausschluss aller übrigen optischen Reize, damit sich Kind nur auf Gesicht und Mund des Therapeuten konzentrieren kann.
- Vorhänge für Kasperletheater: zwei weiße Leinenstoffvorhänge und zwei Aufhängevorrichtungen mit Klettverschluss an Vorhangstange in geöffneter Tür.
- Schmaler Vorhang: als Aushängeschild für Post, Bank oder Verkaufsladen an Vorhangstange in geöffneter Tür.
- Stoffsäckchen mit Klettverschluss: 4 kleine und 4 große an den 2 Tischen anklettbar, zum Verstauen, Ordnen und Auswerten von Spielzeug, Arbeitsmaterialien und Testergebnissen (Rechts-Links, Richtig-Falsch) damit Tisch von unnötigen Gegenständen frei bleibt und der Therapeut genug Arbeitsmaterial in nächster Reichweite hat und dadurch nicht gezwungen wird immer wieder aufzustehen, und sich vom Kind zu entfernen, was sich nachteilig auf die Konzentration der zu behandelten Person und die Kontinuität des Arbeitsablaufes auswirkt. Es ergibt sich ein ruhiges kontinuierliches Arbeiten ohne den Störfaktor Aufstehen und Hinsitzen der Therapeutin um Arbeitsmaterial zu besorgen oder wegzuräumen.
- Breite Bänder mit Klettverschluss: zwei Bänder, welche über die 2 oberen linken und rechten Flügeltürteile befestigt werden (mit 5 cm breiten Klettverschluss) zum Anbringen von Arbeitskarten, Programmkarten, Bildern etc. auf den Innenseiten der Flügeltürteile.
- Farbe außen: Je nach Wunsch: naturbelassen, weiß oder bemalt
- Farbe innen: Weiß. Sie ist neutral, reizarm, hell. Keine Überreizung durch bestimmte Farben bzw. Irritation bei evtl. Farbblindheit. Keine Ablenkung durch Holzmaserung bzw. Muster und Farben im Holz.
- Zur Verwendung nur im Haus (nicht im Freien) geeignet.
- Zur Verwendung im Zimmer direkt unter oder in der Nähe einer sehr guten Lichtquelle (Zimmerdeckenbeleuchtung, Fenster). Aus Sicherheitsgründen (kein Strom, kein Glas) ist im Häuschen keine eigene Lichtquelle vorgesehen und vorhanden.
- Zur Verwendung nur unter therapeutischer Aufsicht.
- Bei Nichtverwendung von oben außen abschließbar.

Die vielen Vorteile des multifunktionellen Therapiehauses:
- Optimal begrenzter Raum der zur Verfügung steht
- genug Platz aber nicht zu viel Raum, klare Grenzen
- Rückenwand zum Schutz und Lärmschutz gepolstert
- Sehr stabil
- Der Schwerpunkt der Konstruktion sitzt tief, was einen weiteren Sicherheitsfaktor für die Standfestigkeit darstellt
- In jedem Zimmer leicht aufstellbar
- Einfach zusammensteckbar
- verschraubbar
- zerlegbar
- Rollbar
- Bremsbar und
- Fixierbar
- Sicher
- Dach mit 3 Variationsmöglichkeiten: offenes Flachdach mit ungebremsten, natürlichem Lichteinfall
- Geschlossenes Flachdach mit milchigem Kunststoffglas (Plexiglas) und
- Satteldach mit milchigem Kunststoffglas(Plexiglas) lässt teilweise natürlichen Lichteinfall zu
- Natürlicher Lichteinfall über offenes Dach und offene Fenster und Türflügel links und rechts
- Zulassen optischer Umweltreize bzw.
- Ausschließen optischer Reize aus der Umgebung durch Schließen der Fenster und des Daches
- Person wird daran gehindert auf die Zimmer Deckenbeleuchtung zu schauen.
- Die Optische Reizüberflutung wird eingedämmt
- Optimales Dosieren von Zulassen optischer Reize, je nach Wunsch und Bedarf der jeweiligen Situation angepasst (Welche und wie weit öffnet man die Fenster oder die Flügeltürteile oder Vorhänge oder das Dach)
- Der Blickwinkel wird eingeschränkt
- der Aktionsradius ist klar begrenzt
- durch die 2 Flügeltüren kann man je nach Bedarf das optische Blickfeld erweitern oder begrenzen (öffnen der Flügeltüren auf 180 Grad oder langsames Schließen auf 90 Grad oder weniger)
- Tisch ergonomisch, stabil
- Tischhöhe bleibt fix, unverändert
- oberhalb des Tisches befinden sich seitlich keine Führungsschienen, daher keine Verletzungsgefahr
- Anpassung des Tisches an den Körper des Kindes so, dass das Kind nicht durch Aktivitäten der Hände unter dem Tisch abgelenkt werden kann
- Der Tisch ist durch den Therapeuten arretierbar damit das Kind den Tisch nicht wegschieben kann
- Sitzbank dem Alter entsprechend und höhenverstellbar
- Zwischenboden je nach Alter und Größe höhenverstellbar bzw. bei sehr großen Kindern und Erwachsenen ganz entfernbar
- Therapeut sitzt immer der zu behandelten Person in den 2 offenen Türflügeln gegenüber.
- Bei Bedarf Ausschluss optischer Umweltreize hinter dem Therapeuten mittels weißem Vorhang hinter dem Therapeuten und klare optische Abgrenzung des Arbeitsraumes zur Fokussierung auf das Wesentliche
- Neutrale Innenbemalung in Weiß: beide Seitenwände, inneres Flachdach sowie alle Türflügel von innen mit Weiß bemalt
- Es eignet sich kein helles Grün wegen eventueller Farbblindheit der zu behandelten Person
- Für alle Altersstufen (vom Babyalter bis ins Erwachsenenalter)
- Person kann sich besser auf die Person gegenüber, die Arbeit, das Spiel vor sich konzentrieren
- Keine Ausweichmöglichkeiten oder Fluchtmöglichkeiten
- Die Person wird sich auf Grund der neutralen Umgebung auf das Wesentliche, sein Gegenüber und die Arbeit vor sich konzentrieren, da es das einzige Interessante ist, was es gibt und sich vom übrigen Umfeld unterscheidet, da es keine andern Ablenkungskriterien gibt (optimale optische Reizreduzierung und ebenfalls akustische Reizdämmung)

Das multifunktionelle Therapiehaus hat zum Ziel eine gezielte optische Reizsetzung (der Therapeut und die gestellte Aufgabe vor ihm) und die akustische Aufmerksamkeit zu fördern (die Stimme und der Inhalt des Gesagten des Therapeuten) und der Person die Möglichkeit zu geben adäquat auf Therapeut und die gestellte Aufgabe zu reagieren und auch zu agieren.

Die Holzkonstruktion und die Schaumstoffpolsterung reduzieren die Geräuschbelastung.

Das multifunktionelle Therapiehaus ist eine Kombination von Einzelteilen wie Stell- oder Trennwänden, stabiler Arbeitstafel, stabilem ergonomischem Tisch, höhenverstellbarem Sitz und Boden und Vorhängen in ein stabiles, der Größe der Person angepasstes Ganzes.

Klare Abgrenzung wo beginnt und wo endet der Arbeitsplatz.

Das multifunktionelle Therapiehaus lässt dosierte Nähe oder Distanz mit seinem Gegenüber zu, was für die Beteiligten leichter akzeptierbar ist und nicht als unangenehm empfunden wird.

Die Person kann selber in Aktion treten, aktiv werden.

Der Therapeut kann leichter stereotypes Verhalten kontrollieren. Die Chance Blickkontakt aufzubauen ist größer.

Bei Bedarf kann der Therapeut die Hände der zu behandelten Person optimal führen. Das Blickfeld wird auf das Wesentliche beschränkt.

Das multifunktionelle Therapiehaus ist vorgesehen für Ergo-, Logo- und Psychotherapeuten zur therapeutischen Behandlung autistischer Kleinkinder, Kinder, Jugendlicher, Erwachsener (Personen mit ASS oder ASD) und Kinder, Jugendlicher und Erwachsener mit Aufmerksamkeitsdefizit-/Hyperaktivitätssyndrom oder -störungen, mit Aufmerksamkeitsdefizitsyndrom oder -Störungen (Personen mit ADHS/ADHD oder ADS/ADD), Hyperkinetische Störungen (HKS), Verhaltens-, Konzentrations- und Lernstörungen und Störungen der sensorischen Integration.

Das multifunktionelle Therapiehaus ist weiters leicht zerlegbar und zusammensteckbar und verschraubbar an alle Körpergrößen und Körperproportionen anpassbar und somit für alle Altersstufen geeignet (Kleinstkind bis Erwachsenen) und ist durch höhenverstellbare Sitz- und Bodenhöhe (Sitzbank und Bodenplatte) individuell anpassbar und schafft dadurch optimale Arbeitsbedingungen durch stark reizreduzierte Atmosphäre, da äußere Einflüsse oder Reize dosier bzw. steuerbar werden - durch stufenweises Reduzieren äußerer, optischer Einflüsse und Reize, mittels Öffnen, teilweisem Schließen oder Schließen der Fenster, Flügeltürchen, Vorhänge und des Daches.

Das multifunktionelle Therapiehaus dient dem Zweck den Patienten während der Therapiestunde von äußeren optischen Reizen abzuschirmen, akustische Umweltreize zu dämmen, damit der Erfolg erzielt wird, dass sich der Patient auf die gestellten Aufgaben des Therapeuten voll konzentrieren kann und damit eine optimale Ausgangsposition hat zur bestmöglichen Lösung derselben.

## Patentansprüche

1. Therapiehaus (100) für den Innenbereich zur therapeutischen Behandlung wenigstens eines Patienten, aufweisend
- einen Eingang (1) für den wenigstens einen Patienten und
- eine Sitzgelegenheit (2) für den wenigstens einen Patienten, **gekennzeichnet durch**
- einen Tisch (3),
wobei wenigstens der Tisch (3) an mindestens einer Wand am Therapiehaus (100) lösbar befestigbar ist und für den Zutritt des wenigstens einen Patienten in das Therapiehaus (100) aus dem Bereich des Eingangs (1) entfernbar ist, und wobei der Tisch (3) am Therapiehaus (100) **durch** einen außerhalb des Therapiehauses (100) befindlichen Therapeuten lösbar befestigbar und vorzugsweise in der Montagestellung arretierbar ist.

2. Therapiehaus nach Anspruch 1, **dadurch gekennzeichnet, dass** der Tisch (3) am Therapiehaus (100) werkzeuglos lösbar befestigbar ist.

3. Therapiehaus nach einem der Ansprüche 1 oder 2, **dadurch gekennzeichnet, dass** das Therapiehaus (100) an gegenüberliegenden Seitenwänden (101, 102) jeweils eine Führungsvorrichtung (10) aufweist, durch welche der Tisch (3) im Wesentlichen horizontal ins Therapiehaus (100) einschiebbar und aus dem Therapiehaus (100) herausziehbar ist.

4. Therapiehaus nach einem der Ansprüche 1 bis 3, **dadurch gekennzeichnet, dass** der Tisch (3) in Montagestellung im Therapiehaus (100) an wenigstens einer Seite eine Bauchaussparung (31) für den wenigstens einen Patienten aufweist.

5. Therapiehaus nach einem der Ansprüche 1 bis 4, **dadurch gekennzeichnet, dass** die Sitzgelegenheit (2) als Sitzbank ausgebildet ist.

6. Therapiehaus nach einem der Ansprüche 1 bis 5, **dadurch gekennzeichnet, dass** die Sitzgelegenheit (2) am Therapiehaus (100) - vorzugsweise an gegenüberliegenden Seitenwänden (101, 102) - lösbar befestigbar ist.

7. Therapiehaus nach einem der Ansprüche 1 bis 6, **dadurch gekennzeichnet, dass** das Therapiehaus (100) eine Höhenverstellvorrichtung (20) für die Sitzgelegenheit (2) aufweist.

8. Therapiehaus nach einem der Ansprüche 1 bis 7, **dadurch gekennzeichnet, dass** das Therapiehaus (100) einen lösbar befestigbaren Zwischenboden (4) aufweist, wobei der Zwischenboden (4) vorzugsweise eine Höhenverstellvorrichtung (21) aufweist.

9. Therapiehaus nach einem der Ansprüche 1 bis 8, **dadurch gekennzeichnet, dass** das Therapiehaus (100) einen Boden (5) aufweist, wobei der Boden (5) vorzugsweise Räder aufweist, durch die das Therapiehaus (100) verfahrbar ist.

10. Therapiehaus nach einem der Ansprüche 7 bis 9, **dadurch gekennzeichnet, dass** die Höhenverstellvorrichtung (20) für die Sitzgelegenheit (2) und/oder die Höhenverstellvorrichtung (21) für den Zwischenboden (4) an den Seitenwänden (101, 102) des Therapiehauses (100) ausgebildet sind.

11. Therapiehaus nach einem der Ansprüche 1 bis 10, **dadurch gekennzeichnet, dass** das Therapiehaus (100) bei seinem Eingang (1) wenigstens eine - vorzugsweise zwei - Flügeltür(en) (6, 7) aufweist.

12. Therapiehaus nach Anspruch 11, **dadurch gekennzeichnet, dass** die wenigstens eine - vorzugsweise zwei - Flügeltür(en) (6, 7) in (jeweils) wenigstens zwei - vorzugsweise drei - Flügeltürenteile (61, 62, 63, 71, 72, 73) geteilt ist (sind) und diese Flügeltürenteile (61, 62, 63, 71, 72, 73) unabhängig voneinander bewegbar sind.

13. Therapiehaus nach einem der Ansprüche 1 bis 12, **dadurch gekennzeichnet, dass** das Therapiehaus (100) eine Breite zwischen 60 cm und 150 cm aufweist und/oder eine Höhe zwischen 100 cm und 250 cm aufweist und/oder eine Tiefe zwischen 60 cm und 150 cm aufweist.

14. Bausatz für ein Therapiehaus (100) nach einem der Ansprüche 1 bis 13, **dadurch gekennzeichnet, dass** die einzelnen Teile des Bausatzes Verbindungseinrichtungen aufweisen, die zum Aufbau und zum Zerlegen des Therapiehauses (100) miteinander lösbar befestigbar sind.

## Claims

1. A therapy house (100) for indoors for the therapeutic treatment of at least one patient, having
- an entrance (1) for the at least one patient, and
- a seat accommodation (2) for the at least one patient, **characterised by**
- a table (3),
wherein at least the table (3) can be releasably fixed to at least one wall on the therapy house (100) and can be removed from the region of the entrance (1) for access of the at least one patient into the therapy house (100) and wherein the table (3) can be releasably fixed to the therapy house (100) by a therapist outside the therapy house (100) and can preferably be arrested in the mounting position.

2. A therapy house according to claim 1 **characterised in that** the table (3) can be releasably fixed to the therapy house (100) without a tool.

3. A therapy house according to one of claims 1 and 2 **characterised in that** at opposite side walls (101, 102) the therapy house (100) has a respective guide device (10) by which the table (3) can be substantially horizontally pushed into the therapy house (100) and pulled out of the therapy house (100).

4. A therapy house according to one of claims 1 to 3 **characterised in that** in the mounting position in the therapy house (100) the table (3) has at at least one side a stomach recess (31) for the at least one patient.

5. A therapy house according to one of claims 1 to 4 **characterised in that** the seat accommodation (2) is in the form of bench.

6. A therapy house according to one of claims 1 to 5 **characterised in that** the seat accommodation (2) can be releasably fixed to the therapy house (100) - preferably at mutually opposite side walls (101, 102).

7. A therapy house according to one of claims 1 to 6 **characterised in that** the therapy house (100) has a height adjusting device (20) for the seat accommodation (2).

8. A therapy house according to one of claims 1 to 7 **characterised in that** the therapy house (100) has an intermediate floor (4) which can be releasably fixed, wherein the intermediate floor (4) preferably has a height adjusting device (21).

9. A therapy house according to one of claims 1 to 8 **characterised in that** the therapy house (100) has a floor (5), the floor (5) preferably having wheels by which the therapy house (100) is moveable.

10. A therapy house according to one of claims 7 to 9 **characterised in that** the height adjusting device (20) for the seat accommodation (2) and/or the height adjusting device (21) for the intermediate floor (4) are provided at the side walls (101, 102) of the therapy house (100).

11. A therapy house according to one of claims 1 to 10 **characterised in that** at its entrance (1) the therapy house (100) has at least one - preferably two - leaf door(s) (6, 7).

12. A therapy house according to claim 11 **characterised in that** the at least one - preferably two - leaf door(s) (6, 7) is (are) divided into (respectively) at least two - preferably three - leaf door portions (61, 62, 63, 71, 72, 73) and said leaf door portions (61, 62, 63, 71, 72, 73) are moveable independently of each other.

13. A therapy house according to one of claims 1 to 12 **characterised in that** the therapy house (100) is of a width of between 60 cm and 150 cm and/or a height of between 100 cm and 250 cm and/or a depth of between 60 cm and 150 cm.

14. A kit for a therapy house (100) according to one of claims 1 to 13 **characterised in that** the individual parts of the kit have connecting devices which can be releasably fixed together for erecting and taking down the therapy house (100).

## Revendications

1. Cabine de traitement (100) pour espace intérieur destinée au traitement thérapeutique d'au moins un patient, présentant
- une entrée (1) pour le au moins un patient et
- un siège (2) pour le au moins un patient, **caractérisée par**
- une table (3)
dans laquelle au moins la table (3) peut être fixée de façon amovible à au moins une paroi de la cabine de traitement (100) et peut être enlevée pour l'accès du au moins un patient dans la cabine de traitement (100) à partir de la zone de l'entrée (1), et dans laquelle la table (3) peut être fixée de façon amovible à la cabine de traitement (100) par un thérapeute se trouvant à l'extérieur de la cabine de traitement (100) et peut être bloquée de préférence dans la position de montage.

2. Cabine de traitement selon la revendication 1, **caractérisée en ce que** la table (3) peut être fixée de façon amovible et sans outil à la cabine de traitement (100).

3. Cabine de traitement selon l'une des revendications 1 ou 2, **caractérisée en ce que** la cabine de traitement (100) présente sur des parois latérales se faisant face (101, 102) à chaque fois un dispositif de guidage (10), par lequel la table (3) peut être introduite dans la cabine de traitement (100) et peut-être extraite de la cabine de traitement (100) essentiellement de façon horizontale.

4. Cabine de traitement selon l'une des revendications 1 à 3, **caractérisée en ce que** la table (3) présente en position de montage dans la cabine de traitement (100) un évidement pour le ventre (31) sur au moins un côté pour le au moins un patient.

5. Cabine de traitement selon l'une des revendications 1 à 4, **caractérisée en ce que** le siège (2) est conçu comme un banc.

6. Cabine de traitement selon l'une des revendications 1 à 5, **caractérisée en ce que** le siège (2) peut être fixé de façon amovible à la cabine de traitement (100) - de préférence à des parois latérales se faisant face (101, 102).

7. Cabine de traitement selon l'une des revendications 1 à 6, **caractérisée en ce que** la cabine de traitement (100) présente un dispositif de réglage de la hauteur (20) pour le siège (2).

8. Cabine de traitement selon l'une des revendications 1 à 7, **caractérisée en ce que** la cabine de traitement (100) présente un fond intermédiaire (4) pouvant être fixé de façon amovible, dans laquelle le fond intermédiaire, dans laquelle le fond intermédiaire (4) présente de préférence un dispositif de réglage de la hauteur (21).

9. Cabine de traitement selon l'une des revendications 1 à 8, **caractérisée en ce que** la cabine de traitement (100) présente un fond (5), dans laquelle le fond (5) présente de préférence des roues par lesquelles la cabine de traitement (100) peut être déplacée.

10. Cabine de traitement selon l'une des revendications 7 à 9, **caractérisée en ce que** le dispositif de réglage de la hauteur (20) pour le siège (2) et / ou le dispositif de réglage de la hauteur (21) pour le fond intermédiaire (4) sont conçus sur les parois latérales (101, 102) de la cabine de traitement (100).

11. Cabine de traitement selon l'une des revendications 1 à 10, **caractérisée en ce que** la cabine de traitement (100) présente à son entrée (1) au moins une - de préférence deux - porte(s) battante(s) (6, 7).

12. Cabine de traitement selon la revendication 11, **caractérisée en ce que** la au moins une - de préférence deux - porte(s) battante(s) (6, 7) est (sont) divisée(s) en (à chaque fois) au moins deux - de préférence trois - parties de porte battante (61, 62, 63, 71, 72, 73) et ces parties de portes battantes (61, 62, 63, 71, 72, 73) sont mobiles indépendamment les unes des autres.

13. Cabine de traitement selon l'une des revendications 1 à 12, **caractérisée en ce que** la cabine de traitement (100) présente une largeur entre 60 cm et 150 cm et / ou présente une hauteur entre 100 cm et 250 cm et / ou une profondeur entre 60 cm et 150 cm.

14. Kit de montage pour une cabine de traitement (100) selon l'une des revendications 1 à 13, **caractérisé en ce que** les différentes pièces du kit de montage présentent des dispositifs de liaison qui peuvent être fixés ensemble de façon amovible pour le montage et pour le démontage de la cabine de traitement (100).
